# EUROPÄISCHE PATENTANMELDUNG

(11) **EP 0 833 043 A1**
(43) Veröffentlichungstag der Anmeldung: **01.04.1998**
(21) Anmeldenummer: 97113176.8
(22) Anmeldetag: 31.07.1997
(51) Int. Cl.: F02D 41/14, F02D 13/02

(54) **Betriebsverfahren für eine mehrzylindrische Brennkraftmaschine**

(30) Priorität: 26.09.1996 DE 19639724
(71) Anmelder: Bayerische Motoren Werke Aktiengesellschaft, 80788 München (DE)
(72) Erfinder: Emonts, Johannes, 85253 Grossberghofen (DE)

(57) **Zusammenfassung**

Bei einem Betriebsverfahren für eine mehrzylindrige Brennkraftmaschine wird für sämtliche Zylinder ein im wesentlichen gleiches Luft-Kraftstoff-Gemisch eingestellt, wobei sämtlichen Zylindern eine gleiche Kraftstoffmenge zugeteilt wird und die Gemisch-Gleicheinstellung durch zylinderindividuelle Luftmengen-Steuerung erfolgt.

## Beschreibung

Die Erfindung betrifft ein Betriebsverfahren für eine mehrzylindrige Brennkraftmaschine, wobei für sämtliche Zylinder ein im wesentlichen gleiches Luft-Kraftstoff-Gemisch eingestellt wird. Durch eine derartige Luft-Kraftstoff-Gemisch-Einstellung im Hinblick auf eine Gleichverteilung über sämtliche Brennkraftmaschinen-Zylinder sind optimale Abgasemissionen sowie eine ausgezeichnete Laufruhe der Brennkraftmaschine erzielbar. Üblich ist es dabei, die jedem Zylinder zugemessene Kraftstoffmenge individuell anzupassen. Noch weiter geht das in der DE 40 24 369 A1 beschriebene Verfahren zur Regelung der den Zylindern einer Brennkraftmaschine zugeführten Gemisch- bzw. Kraftstoffmenge, wonach bei jedem Zylinder einer gemischverdichtenden Brennkraftmaschine die Zylinder-Einlaßventile, über welche das Luft-Kraftstoff-Gemisch in den Zylinder-Brennraum gelangt, im Hinblick auf einen identischen Ventilhubverlauf angesteuert werden.

In der Erkenntnis, daß durch den zunehmenden Einsatz variabler Ventilsteuerungen an Brennkraftmaschinen, durch welche nicht mehr fest vorgegebene Ventilhubverläufe realisiert werden, sondern betriebspunktabhängig unterschiedliche Ventilhubverläufe erzeugbar sind, immer größere Toleranzen in der Steuerung der Zylinder-Einlaßventile auftreten und somit die Gemisch-Ungleichverteilung über den einzelnen Zylindern nur noch verstärkt wird, geht die vorliegende Erfindung einen völlig anderen Weg als in der DE 40 24 369 A1 vorgeschlagen, um bei einer mehrzylindrigen Brennkraftmaschine für sämtliche Zylinder ein im wesentlichen gleiches Luft-Kraftstoff-Gemisch einzustellen.
Erfindungsgemäß wird nämlich sämtlichen Zylindern eine gleiche Kraftstoffmenge zugeteilt, während die Gemisch-Gleicheinstellung durch zylinderindividuelle Luftmengen-Steuerung erfolgt. Vorteilhafte Weiterbildungen sind Inhalt der Unteransprüche.

Wenn bevorzugt die Hubverläufe der Zylinder-Einlaßventile in einem bzw. in jedem Betriebspunkt im Hinblick auf eine gewünschte Gemisch-Gleicheinstellung bzw. Gemisch-Gleichverteilung angepaßt werden, so erhält in diesem Betriebspunkt jeder Zylinder die gleiche Luftmenge. Wird nun in diesem Betriebspunkt jedem Zylinder die gleiche Kraftstoffmenge zugeteilt, so stellt sich mit Sicherheit für jeden Zylinder ein im wesentlichen gleiches Gemisch ein, d. h. es ist für die gewünschte Gemisch-Gleichverteilung über den einzelnen Zylindern gesorgt. Es kann somit in Abhängigkeit von der Position eines Lastwunschgebers - bei einer in einem Kraftfahrzeug eingebauten Brennkraftmaschine handelt es sich hierbei üblicherweise um das Gaspedal - allen Zylindern der Brennkraftmaschine die gleiche, diesem Lastwunsch entsprechende Kraftstoffmenge zugeteilt werden, wonach die zylinderindividuelle Luftmenge derart angepaßt wird, daß sich für alle Zylinder ein gleiches Gemisch einstellt, was wie bereits erläutert vorteilhaft ist im Hinblick auf die Laufruhe sowie die Abgasemissionen der Brennkraftmaschine. Zwar wäre eine Gemischgleichverteilung über alle Zylinder grundsätzlich auch durch alleinige Anpassung der zugeteilten Kraftstoffmenge realisierbar, jedoch würde sich dann eine ungleichmäßige Energieverteilung über den einzelnen Zylindern einstellen, was unruhigen Lauf der Brennkraftmaschine zur Folge haben kann, insbesondere in niedrigen Lastpunkten. Dies wird nun mit dem erfindungsgemäßen Verfahren vermieden. Besonders vorteilhaft ist in diesem Zusammenhang die Variation der zylinderindividuellen Luftmenge durch Anpassung der Hubverläufe, wenn diese Hubverläufe ohnehin bereits veränderbar sind, was aber bei neueren Brennkraftmaschinen immer mehr Verwendung findet. Vorteilhafterweise ist durch eine Anpassung der Einlaßventil-Hubverläufe nämlich auch eine sog. drosselfreie Laststeuerung möglich, bei welcher die bislang bei gemischverdichtenden Brennkraftmaschinen übliche Drosselklappe entfallen kann und somit geringere Ladungswechselverluste auftreten.

Bei der Anpassung der Hubverläufe der Zylinder-Einlaßventile kann einer für die Einlaßventile aller Zylinder gleichen Grund-Hubverlauf-Steuerung ein jeweils zylinderindividueller Differenz-Hubverlauf überlagert sein. Es ist aber auch möglich, generell jedes Zylinder-Einlaßventil im Hinblick auf seinen Hubverlauf individuell anzusteuern. Dabei kann die Einzelansteuerung mit Hilfe geeignet wirkender hydraulischer Verstellzylinder erfolgen, die in die Betätigungsmechanik für das jeweilige Einlaßventil eingreifen und in geeigneter Weise angesteuert werden, um die gewünschten Zylinder-Einlaßventil-Hubverläufe zu erzielen. Besonders einfach ist die Erfindung aber bei voll variablen Ventilbetätigungsvorrichtungen zu realisieren, beispielsweise bei voll hydraulisch oder elektrisch/elektromagnetisch betätigten Brennkraftmaschinen-Ladungswechsel-Ventilen.

In einer Steuerelektronik, welche für die Ausführung des beschriebenen Betriebsverfahrens sorgt, kann eine für alle Zylinder gleiche Grund-Hubverlauf-Steuerung in einem Vorsteuerkennfeld abgelegt sein. Dann ist es wie bereits erläutert möglich, beispielsweise mit dem Gaspedal die Kraftstoffmenge identisch für alle Zylinder vorzugeben und mit dieser Ventilhub-Vorsteuerung zunächst die zugehörigen Hubwerte für jeden Zylinder gleich einzustellen. In Abhängigkeit von den damit erzielten Ergebnissen, d. h. unter Berücksichtigung der sich damit ergebenden Gemisch-Ungleichverteilung können dann die Ventilhubverläufe der einzelnen Zylinder feingeregelt werden, und zwar im Hinblick auf die genannte Gemisch-Gleichverteilung. Die Abweichung von der Vorsteuerung kann dabei zylinderspezifisch adaptiert werden, d. h. die zylinderindividuellen Hubverlauf-Korrekturwerte können dann in zylinderspezifischen Adaptionskennfeldern der Steuerelektronik abgelegt werden.

Überwacht bzw. geregelt werden kann die Gemisch-Gleichverteilung über alle Zylinder anhand der zylinderindividuellen Abgaszusammensetzung. Hierzu können in den Abgasrohren der einzelnen Zylinder jeweils Lambda-Sonden vorgesehen sein, deren Anzeigewerte jeweils gleich sein sollen, da dies ein Indiz auf eine Gemisch-Gleichverteilung ist. Durch die Steuerelektronik erfolgt somit - im allgemeinsten Fall - eine derartige zylinderindividuelle Luftmengen-Steuerung, daß die Abgaszusammensetzung aller Zylinder im wesentlichen gleich ist, beispielsweise bezüglich des Lambda-Wertes. Daneben ist es aber auch möglich, die Brennraum-Druckwerte in den einzelnen Zylindern zu überwachen und eine derartige Luftmengen-Steuerung vorzunehmen, daß diese Brennraum-Druckwerte jeweils in einem Betriebspunkt für alle Zylinder im wesentlichen gleich sind, da dies ebenfalls ein Indiz für eine Gemisch-Gleichverteilung über sämtlichen Zylindern ist. Daneben sind selbstverständlich eine Vielzahl weiterer Abwandlungen und Ergänzungen möglich, ohne den Inhalt der Patentansprüche zu verlassen. Stets werden den nahezu identischen Einspritzmengen der einzelnen Brennkraftmaschinen-Zylinder die erforderlichen Luftmassen bzw. -mengen unabhängig von den Bauteiltoleranzen und Bauteil-Elastizitäten exakt zugemessen. So ergibt sich eine gleichmäßige Abgasqualität über alle Zylinder bei geringsten Ladungswechselverlusten und damit geringstem Kraftstoffverbrauch.

## Patentansprüche

1. Betriebsverfahren für eine mehrzylindrige Brennkraftmaschine, wobei sämtlichen Zylindern eine gleiche Kraftstoffmenge zugeteilt wird und für alle Zylinder ein im wesentlichen gleiches Luft-Kraftstoff-Gemisch durch zylinderindividuelle Luftmengen-Steuerung eingestellt wird,
dadurch gekennzeichnet, daß die Gemisch-Gleichverteilung über alle Zylinder anhand der Brennraum-Druckwerte in den Zylindern überwacht wird.

2. Betriebsverfahren nach Anspruch 1,
dadurch gekennzeichnet, daß die Hubverläufe der Zylinder-Einlaßventile im Hinblick auf die Gemisch-Gleichverteilung angepaßt werden.

3. Betriebsverfahren nach Anspruch 2,
dadurch gekennzeichnet, daß einer für die Einlaßventile aller Zylinder gleichen Grund-Hubverlauf-Steuerung ein zylinderindividueller Differenz-Hubverlauf überlagert wird.

4. Betriebsverfahren nach Anspruch 2 oder 3,
dadurch gekennzeichnet, daß der zylinderindividuelle Hubverlauf mit Hilfe geeignet wirkender hydraulischer Verstellzylinder erzeugt wird.

5. Betriebsverfahren nach einem der vorangegangenen Ansprüche,
dadurch gekennzeichnet, daß eine für alle Zylinder gleiche Grund-Hubverlaufsteuerung in einem Vorsteuerkennfeld einer geeigneten Steuerelektronik abgelegt ist, und daß zylinderindividuelle Hubverlauf-Korrekturwerte in zylinderspezifischen Adaptionskennfeldern abgelegt werden.
